# EUROPÄISCHE PATENTANMELDUNG

(11) **EP 2 497 994 A2**
(43) Veröffentlichungstag der Anmeldung: **12.09.2012**
(21) Anmeldenummer: 12156810.9
(22) Anmeldetag: 24.02.2012
(51) Int. Cl.: F16N 21/02

(54) **Schmiernippel-Anordnung**

(30) Priorität: 09.03.2011 DE 102011013434
(71) Anmelder: Huck, Rudolf, 90441 Nümberg (DE)
(72) Erfinder: Huck, Rudolf, 90441 Nümberg (DE)
(74) Vertreter: Förster, Susanne

(57) **Zusammenfassung**

Die Erfindung betrifft eine Schmiernippel-Anordnung mit einem Schmiernippel, der einen nach außen weisenden Nippelkopf (5) aufweist, sowie einem Gewinde (6) zum Einschrauben der Schmiernippel-Anordnung (1), wobei Nippelkopf (5) und Gewinde (6) zueinander winkelig angeordnet sind, wobei ein Winkelstück (8) vorgesehen ist, welches eine durchgängige erste Bohrung (9) sowie eine zur ersten Bohrung (9) winkelig angeordnete und in die erste Bohrung einmündende zweite Bohrung (10) aufweist, wobei die erste Bohrung von einer Hohlschraube durchsetzt ist, die Hohlschraube (11) das Gewinde (6) und mindestens eine seitliche Bohrung (12) aufweist, und in der zweiten Bohrung (10) der Schmiernippel von außen befestigt ist.

## Beschreibung

Die vorliegende Erfindung betrifft eine Schmiernippel-Anordnung mit einem Schmiernippel, der einen nach außen weisenden Nippelkopf aufweist, sowie einem Gewinde zum Einschrauben des Schmiernippels, wobei Nippelkopf und Gewinde zueinander winkelig angeordnet sind.

Mittels Schmiernippel wird eine Lagerstelle, z.B. an einem Werkzeugwagen, mittels einer Fettpresse mit Schmierstoff versorgt. Die Schmiernippel weisen oftmals ein Außengewinde auf, mit welchem sie in eine Lagerstelle mit einem korrespondierenden Innengewinde eingeschraubt werden können. Es gibt auch Schmiernippel, die eingeschlagen bzw. eingepresst werden. Es ist notwendig, dass der Schmiernippel für eine Fettpresse bzw. eine Handschmierpresse gut zugänglich ist, damit er mit Schmierstoff versorgt werden kann. Je nach den baulichen Gegebenheiten werden Schmiernippel in gerader oder in abgewinkelter Bauweise (mit 45°- oder 90°-Winkel) eingesetzt. Werden die Winkelnippel korrekt eingeschraubt, stehen sie oft in der verkehrten Richtung ab und können nicht mit der Fettpresse zum Abschmieren erreicht werden. Damit diese abgewinkelten Schmiernippel für die Fettpresse frei zugänglich sind, müssen sie gerade soweit eingeschraubt werden, bis sie in die gewünschte Richtung abstehen. Dabei kann es vorkommen, dass sie entweder zu locker sitzen oder zu stark angezogen werden, was besonders bei kleinen Schmiernippeln problematisch ist.

Der Erfindung liegt daher die Aufgabe zugrunde, einen Schmiernippel in abgewinkelter Bauweise zur Verfügung zu stellen, der in einfacher Weise eingesetzt werden kann und für die Fettpresse stets gut zugänglich ist.

Die Erfindung wird durch die gesamte Lehre des Patentanspruchs 1 gelöst. Vorteilhafte Weiterbildungen der Erfindung ergeben sich aus den Unteransprüchen 2 - 11.

Erfindungsgemäß ist ein Winkelstück vorgesehen, welches eine durchgängige erste Bohrung sowie eine zur ersten Bohrung winkelig angeordnete und in die erste Bohrung einmündende zweite Bohrung aufweist, wobei die erste Bohrung von einer Hohlschraube durchsetzt ist, die ein Gewinde zum Einschrauben und mindestens eine seitliche Bohrung aufweist, und in der zweiten Bohrung der Schmiernippel befestigt ist. Beim Einschrauben der Schmiernippel-Anordnung wird der in das Winkelstück eingesetzte Schmiernippel in der gewünschten Position festgehalten und die Hohlschraube wird in die Lager- oder Schmierstelle eingeschraubt bis sie festsitzt. Die Schmiernippel-Anordnung ist somit einerseits sicher mittels der Hohlschraube fixiert und andererseits ideal ausgerichtet. Der Schmiernippel kann auch im eingebauten Zustand durch Lösen der Hohlschraube noch nachjustiert werden, damit eine einwandfreie Abschmierung erfolgen kann. Das Fett gelangt über den Nippelkopf des eingesetzten Schmiernippels nach innen und von dort aus über die seitliche Bohrung der Hohlschraube in das Innere der Hohlschraube, um von dort schließlich in die Lagerstelle vorzudringen. Ein weiterer bedeutender Vorteil der Erfindung liegt darin, dass unterschiedliche, herkömmliche Schmiernippel in das Winkelstück eingesetzt werden können. Dadurch können auch die üblichen Fettpressen zum Einsatz kommen. Es können auch Schmiernippel eingesetzt werden, die für eine automatische Schmierung ausgelegt sind. Bei der automatischen Schmierung erfolgt ein kontinuierliches Abschmieren. Die Schmiernippel-Anordnung ist außerdem für jede Größenordnung, u.a. für verschiedene Gewinde, realisierbar.

Die erste und die zweite Bohrung des Winkelstücks können zueinander in einem Winkel von insbesondere 20° - 90° angeordnet sein. Dabei ist es bei jedem Winkelbereich möglich, die einzelnen eingesetzten Schmiernippel um 360° um die senkrechte Achse zu drehen und in jeder beliebigen Winkelstellung durch die Hohlschraube zu fixieren. Je nach Zugänglichkeit von Hohlschraube bzw. Einbausituation und Schmiernippel kann das jeweilige Winkelstück mit der entsprechenden Winkelanordnung von erster und zweiter Bohrung ausgewählt werden. Sollte es notwendig sein, dass zwischen Hohlschraube und Schmiernippel ein größerer Winkel als 90° C erforderlich ist, dann kann das entsprechende Winkelstück einfach in umgekehrter Weise verwendet werden, indem die Hohlschraube von der anderen Seite durch die erste Bohrung eingesetzt wird, so dass zwischen Schmiernippel und Hohlschraube ein Winkel von größer als 90° vorhanden ist. Vorteilhafterweise kann der Schmiernippel eine gerade Form aufweisen, da der Winkel ohnehin mittels des Winkelstücks eingestellt wird. Schmiernippel mit einer geraden Form sind kostengünstiger als starre, abgewinkelte Schmiernippel und haben darüber hinaus einen geringeren Platzbedarf.

Der Schmiernippel kann in die zweite Bohrung eingeschraubt oder eingepresst sein. Zum Einschrauben des Schmiernippels kann dieser alle möglichen Außengewinde aufweisen, welche in das korrespondierende Innengewinde des Winkelstücks einschraubbar sind. Bei Verschleiß kann der Schmiernippel auch in einfacher Weise ausgetauscht werden, insbesondere dann, wenn er in das Winkelstück eingeschraubt ist.

Ferner kann zwischen dem Schraubenkopf der Hohlschraube und dem Winkelstück und/oder zwischen dem Schmiernippel und dem Winkelstück ein Dichtring vorgesehen sein. Diese Dichtringe können je nach Abschmierdruck in verschiedenen Ausführungen eingesetzt werden. Die Dichtringe sorgen dafür, dass das eingespritzte Fett nicht in unerwünschter Weise nach außen dringt. Außerdem schonen die Dichtringe die miteinander verschraubten oder zusammengesetzten Bauteile.

Mit besonderem Vorteil kann das Winkelstück im Bereich der ersten Bohrung außen einen Griffbereich aufweisen. Damit lässt sich das Winkelstück gut handhaben und leicht in die gewünschte Stellung drehen. Der Griffbereich kann dazu z.B. eine aufgeraute oder mit Erhöhungen bzw. Vertiefungen, z.B. in Form von Noppen oder Rillen, versehene Oberfläche aufweisen.

Das Winkelstück kann auch im Bereich der ersten Bohrung außen eine polygonale Querschnittsform aufweisen und ist dadurch gut greifbar. Z.B. kann das Winkelstück im Bereich der ersten Bohrung abgeflachte Außenwände aufweisen. Dazu können die drei freien Außenseiten des Winkelstücks (die drei anderen Seiten sind mit Hohlschraube und dem Schmiernippel besetzt) rechtwinklig zueinander angeordnet sein. Dadurch wird auch eine flache Bauweise mit einem geringen Platzbedarf realisiert.

Das Winkelstück kann außen, insbesondere im Bereich der ersten Bohrung auch dergestalt ausgebildet sein, dass es einer gängigen Schlüsselweite, z.B. eines Schraubensschlüssels, entspricht bzw. damit korrespondiert. Dies hat den Vorteil, dass das Winkelstück in der gewünschten Orientierung gut mit einem Schraubenschlüssel festgehalten werden kann, während die Hohlschraube in das Lager eingeschraubt wird. Dies ist auch dann von Vorteil, wenn die Schmiernippel-Anordnung für die Hand schwer zugänglich ist, mit einem schmalen Schraubenschlüssel aber leichter erreicht werden kann.

Der Schmiernippel kann innen mit der federbelasteten, in einer Richtung wirkenden Ventilkugel ausgestaltet sein. Wenn die Öffnung um die Kugel aufgrund des Druckes von durch die Fettpresse eingeleitetem Schmierfett geöffnet wird, tritt das Schmierfett in den Schmiernippel ein und wird dann vom Inneren des Nippels zum Inneren der Hohlschraube transportiert.

Wie bereits oben erwähnt, kann der Schmiernippel auch für die Durchführung einer automatischen Schmierung ausgestaltet sein. Eine automatische Schmierung bedeutet, dass eine kontinuierliche, automatische Abschmierung erfolgt.

Das Winkelstück sowie die Hohlschraube können den jeweiligen Belastungen angepasst werden und können aus unterschiedlichsten Materialien gefertigt werden. Zweckmäßigerweise kann das Winkelstück aus Metall, insbesondere aus Messing, Stahl, Edelstahl, Aluminium oder einer Aluminiumlegierung bestehen. Das Winkelstück kann auch aus Kunststoff bestehen, dessen Festigkeit bei geringeren einwirkenden Kräften ausreicht. Es kann auch aus hochfestem Kunststoff bestehen, der auch größere Kräfte aufnehmen kann. Ebenso können auch die Hohlschraube und/oder der Schmiernippel aus Stahl oder anderen hochfesten Materialien bestehen.

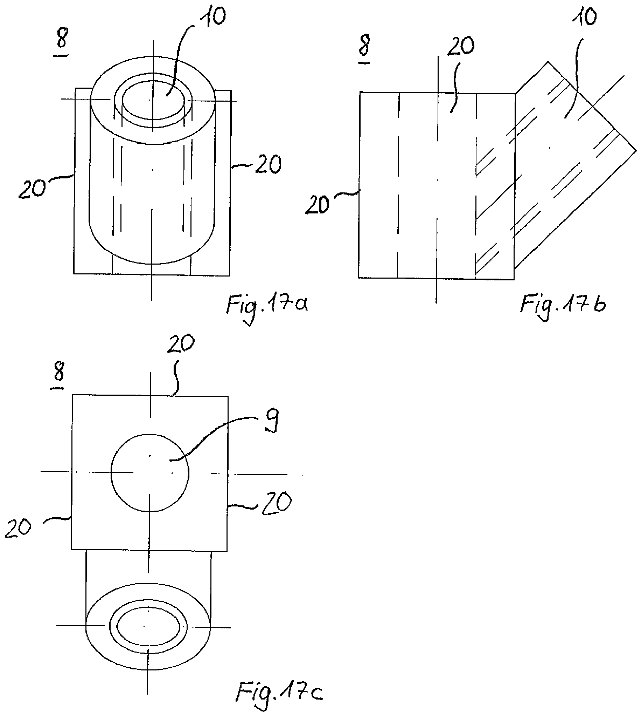

Die Erfindung ist anhand von vorteilhaften Ausführungsbeispielen gemäß den Zeichnungsfiguren näher erläutert. Diese zeigen:
- Fig. 1: Schmiernippel-Anordnung im 90°-Winkel im Schnitt;
- Fig. 2: Explosionsdarstellung der Schmiernippel-Anordnung gemäß Fig. 1 im Schnitt;
- Fig. 3: Schmiernippel-Anordnung gemäß Fig. 1 im Schnitt mit aufgesetzter Fettpresse;
- Fig. 4: Schmierwinkel-Anordnung im 90°-Winkel mit Kegelnippel in
a) Seitenansicht
b) Draufsicht;
- Fig. 5: Schmierwinkel-Anordnung im 90°-Winkel mit Trichternippel in
a) Seitenansicht
b) Draufsicht;
- Fig. 6: Schmierwinkel-Anordnung im 90°-Winkel mit Kugelnippel in
a) Seitenansicht
b) Draufsicht;
- Fig. 7: Schmiernippel-Anordnung im 45°-Winkel im Schnitt;
- Fig. 8: Explosionsdarstellung der Schmiernippel-Anordnung gemäß Fig. 7 im Schnitt;
- Fig. 9: Schmiernippel-Anordnung gemäß Fig. 7 im Schnitt mit aufgesetzter Fettpresse;
- Fig. 10: Schmierwinkel-Anordnung im 45°-Winkel mit Kegelnippel in
a) Seitenansicht
b) Draufsicht;
- Fig. 11: Schmierwinkel-Anordnung im 45°-Winkel mit Trichternippel in
a) Seitenansicht
b) Draufsicht;
- Fig. 12: Schmierwinkel-Anordnung im 45°-Winkel mit Kugelnippel in
a) Seitenansicht
b) Draufsicht;
- Fig. 13: Kegelnippel in
a) Vorderansicht
b) Seitenansicht;
- Fig. 14: Trichternippel in
a) Vorderansicht
b) Seitenansicht;
- Fig. 15: Kugelnippel in
a) Vorderansicht
b) Seitenansicht;

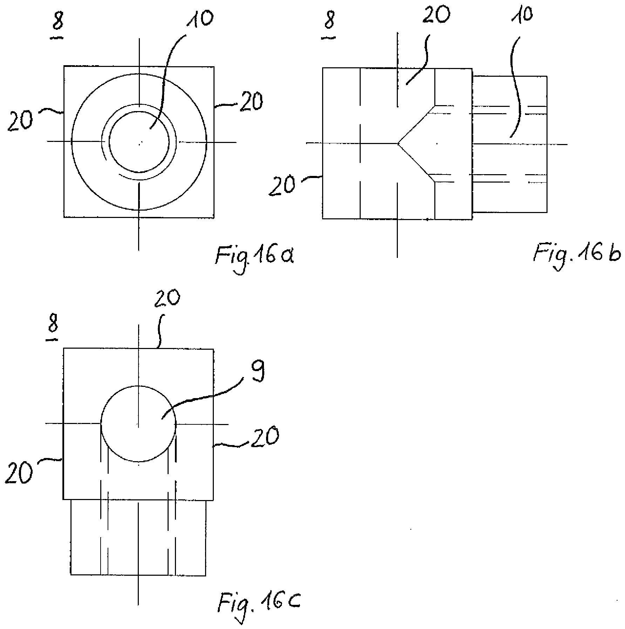

- Fig. 16: Winkelstück im 90°-Winkel in
a) Vorderansicht
b) Seitenansicht
c) Draufsicht
- Fig. 17: Winkelstück im 45°-Winkel in
a) Vorderansicht
b) Seitenansicht
c) Draufsicht

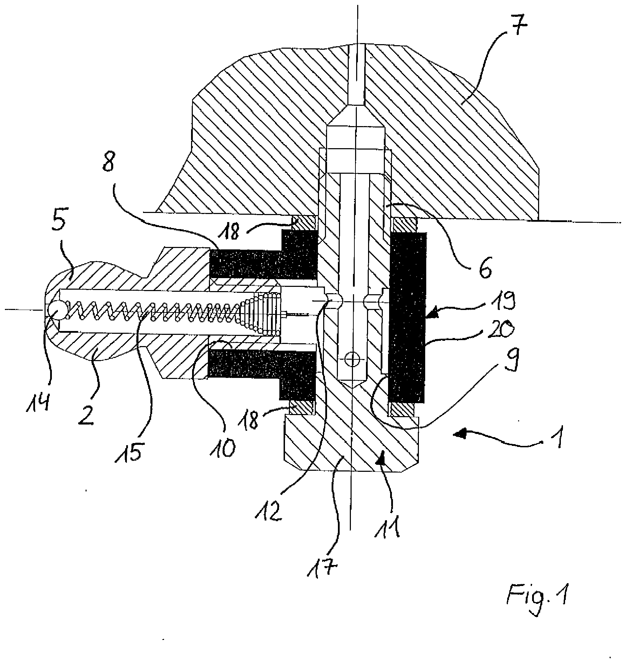

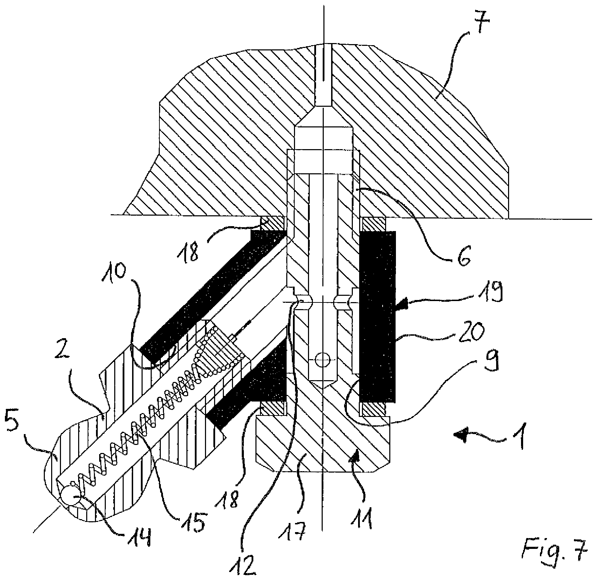

Bezugsziffer 1 kennzeichnet die Schmiernippel-Anordnung in ihrer Gesamtheit. Sie umfasst einen Schmiernippel, der in Fig. 1 als Kegelnippel 2 dargestellt ist. Der Schmier- bzw. Kegelnippel 2 weist einen nach außen weisenden Nippelkopf 5 auf. Zum Einschrauben der Schmiernippel-Anordnung 1 ist ein Gewinde 6 vorgesehen. In den Darstellungen gemäß Fig. 1 und 7 ist die jeweilige Schmiernippel-Anordnung 1 in einem Bereich eines Lagers 7 eingeschraubt.

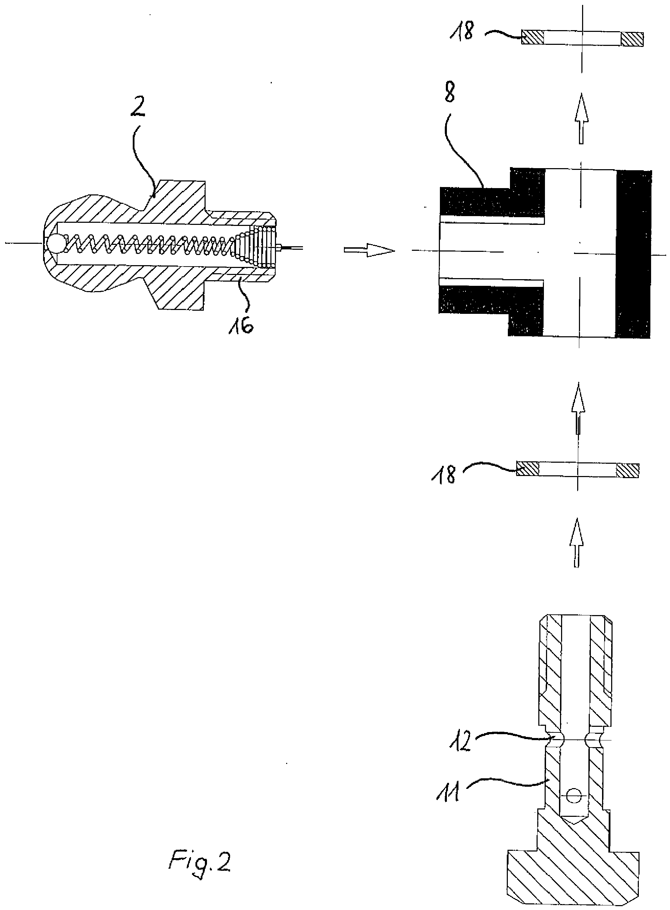

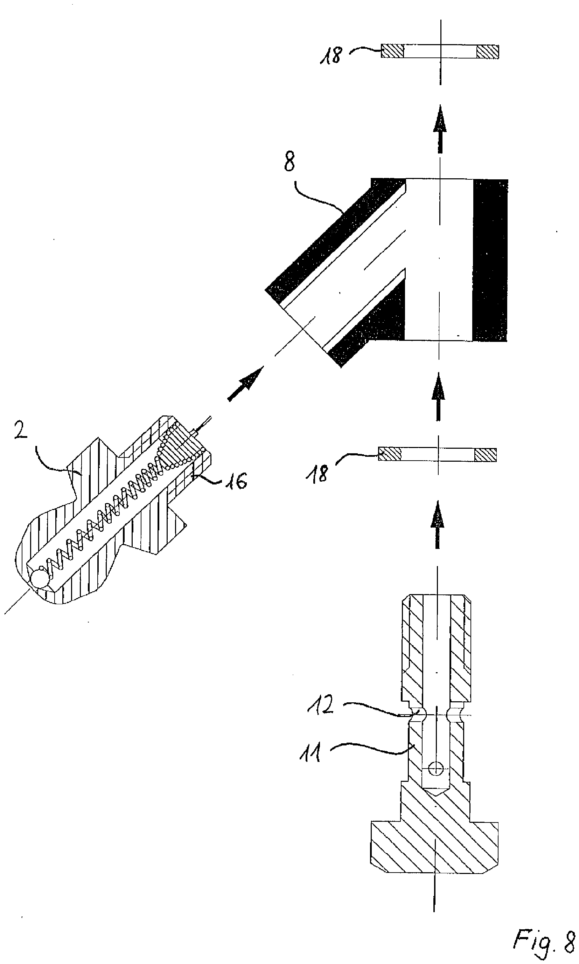

Die Schmiernippel-Anordnung 1 umfasst ferner ein Winkelstück 8, welches eine durchgängige erste Bohrung 9 sowie eine zur ersten Bohrung 9 im 90°-Winkel angeordnete und in die erste Bohrung 9 einmündende zweite Bohrung 10 aufweist. Die erste Bohrung 9 wird von einer Hohlschraube 11 durchsetzt, welche das Gewinde 6 und mindestens eine seitliche Bohrung 12 aufweist. In der zweiten Bohrung 10 mit Innengewinde ist der Schmiernippel von außen eingeschraubt. In Fig. 2 bzw. Fig. 8 sind die einzelnen Elemente der Schmiernippel-Anordnung 1 getrennt voneinander dargestellt, wobei die Pfeile die Richtung anzeigen, wie sie zusammengesetzt werden.

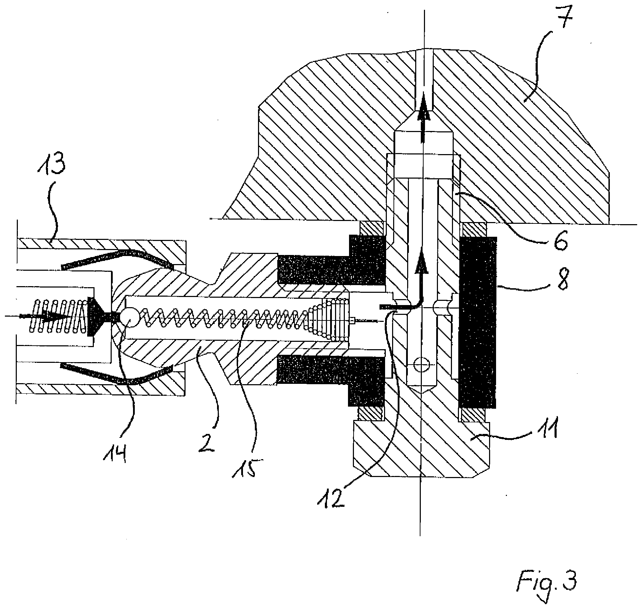

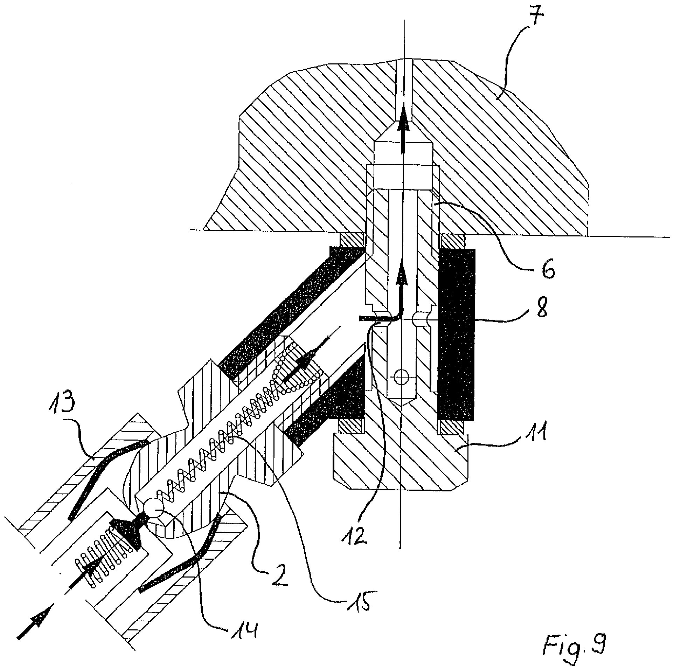

Die Schmiernippel-Anordnung 1 erlaubt es, den zur Einschraubrichtung winkelig abstehenden Schmiernippel in die gewünschte Position durch Drehung des Winkelstücks 8 zu bringen, solange die Hohlschraube 11 noch nicht festgezogen ist. Dabei ist eine Verdrehung des Winkelstücks 8 und damit auch des darin eingesetzten Schmiernippels um 360° möglich, wie dies vor allem aus den Zeichnungsfiguren 4b, 5b, und 6b sowie 10b, 11b und 12 b hervorgeht. Nach dem Festziehen der Hohlschraube 11 ist die Schmiernippel-Anordnung 1 fest fixiert und der Schmiernippel ideal ausgerichtet. Bei Bedarf ist es jederzeit möglich, die Hohlschraube 11 zu lockern und das Winkelstück 8 und damit auch den darin eingesetzten Schmiernippel in einer anderen Stellung zu fixieren. Damit wird es ermöglicht, dass eine optimale Abschmierung erfolgen kann, da der Schmiernippel bzw. der in Fig. 3 dargestellte Kegelnippel 2 dann für die Fettpresse 13 optimal zugänglich ist. In Fig. 3 ist nur der vordere Teil der Fettpresse 13 dargestellt. Eine entsprechende Darstellung zeigt Fig. 9, bei der auch der vordere Abschnitt der Fettpresse 13 gezeigt ist, welche am Kegelnippel 2 übergreift. In Fig. 9 sind die erste Bohrung 9 und zweite Bohrung 10 in einem anderen Winkel, nämlich im 45°-Winkel, zueinander angeordnet, wohingegen der Winkel in Fig. 3 90° beträgt. Zusätzlich ist aus den Fig. 3 und 9 der Fluss des eingepressten Fettes mittels der dargestellten Pfeile gezeigt. Das Fett wird von der Fettpresse 13 in den Nippelkopf 5 eingedrückt, indem die dort angeordnete federbelastete Ventilkugel 14 zurückgedrängt wird. Die Ventilkugel 14 hält bei nicht angesetzter Fettpresse 13 den Nippelkopf 5 geschlossen, indem die Feder 15 gegen die Ventilkugel 14 drückt. Das Fett gelangt vom Inneren des Schmiernippels bzw. Kegelnippels 2 durch die seitliche Bohrung 12 der Hohlschraube 11 in deren Innenraum und wird von dort schließlich nach vorne durch die Hohlschraube 11 heraus bis in die Lagerstelle hinein gedrückt.

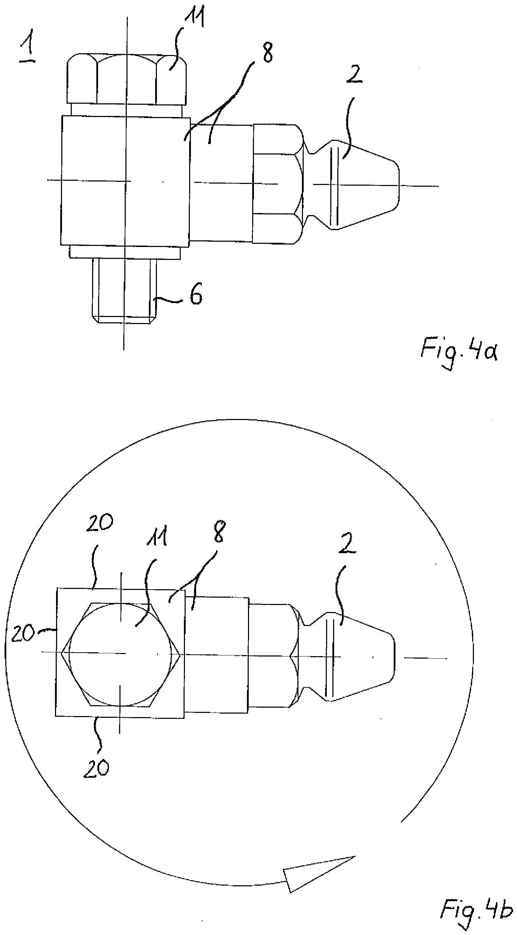

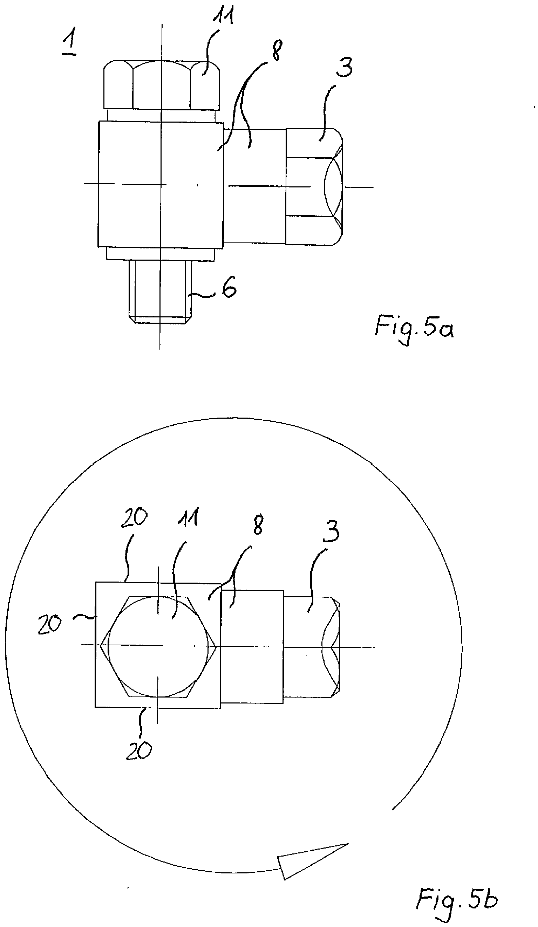

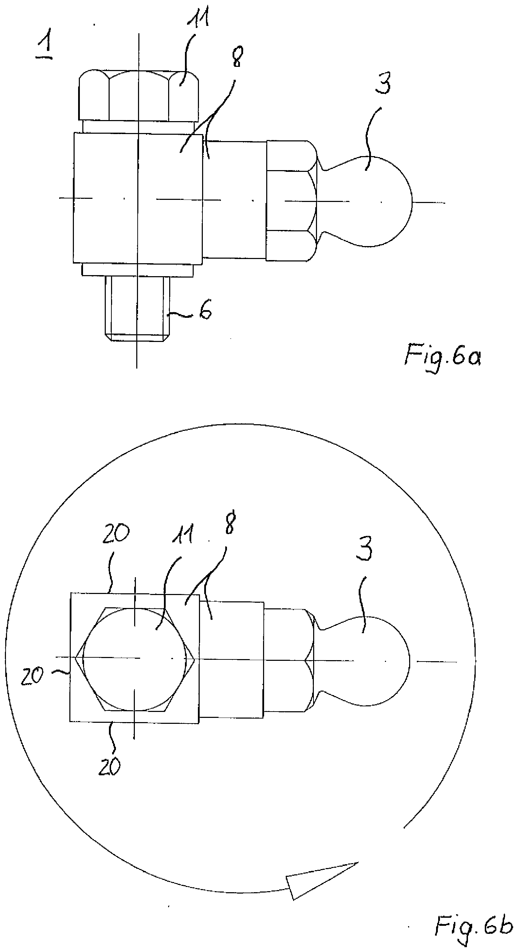

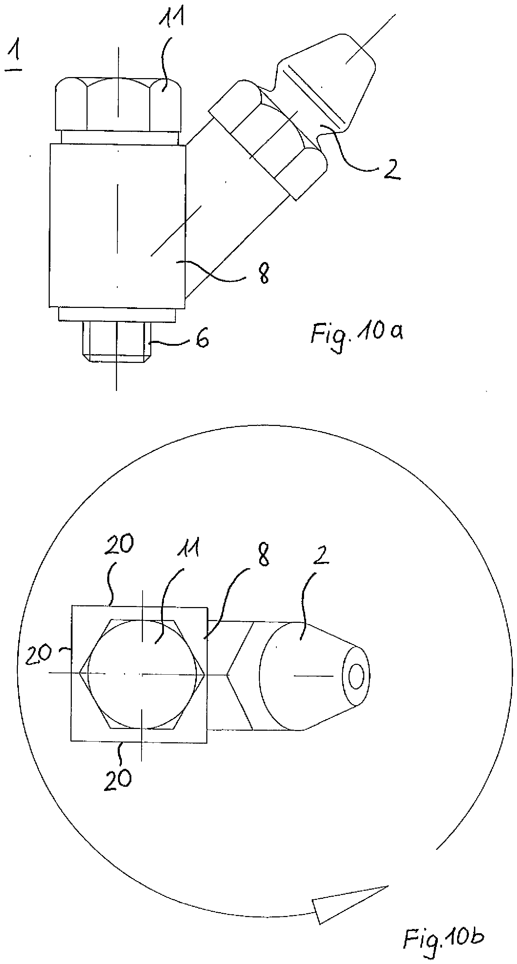

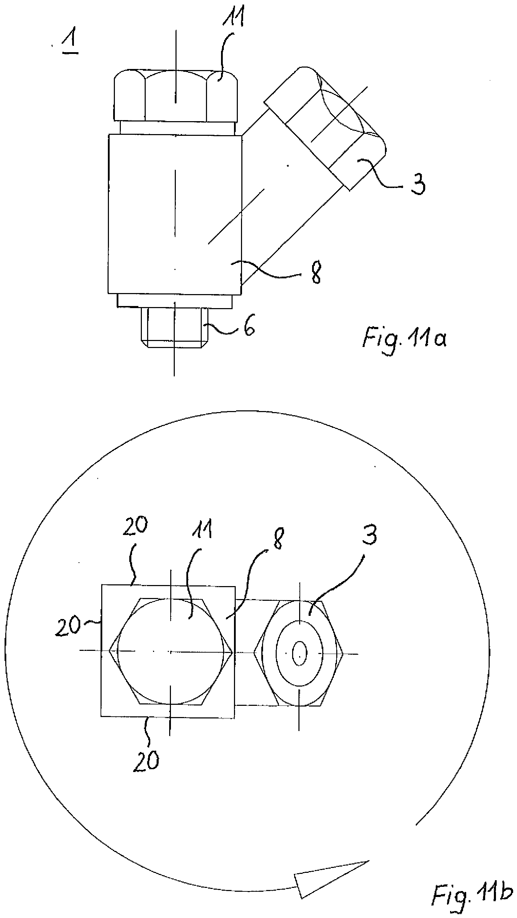

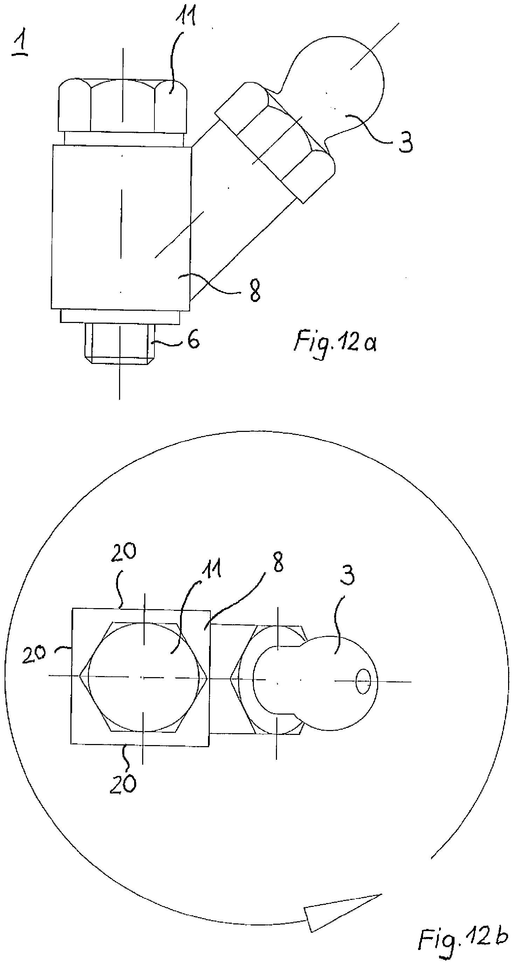

Erste Bohrung 9 und zweite Bohrung 10 können zueinander in verschiedenen Winkeln von etwa 20° - 90° angeordnet sein. In den Fig. 1 - 6 beträgt der Winkel 90°, bei den Ausführungsvarianten gemäß Fig. 7 - 12 beträgt der Winkel 45°. Je nach Zugänglichkeit der abzuschmierenden Lagerstelle oder Einbausituation der Schmiernippel-Anordnung kann das gewünschte Winkelstück 8 ausgewählt werden. Die in den Zeichnungsfiguren dargestellten Winkelstücke von 45° und 90° sind nur Beispiele. Es sind auch beliebige andere Winkelstellungen möglich. Zweckmäßigerweise liegen diese zwischen 20° und 90°.

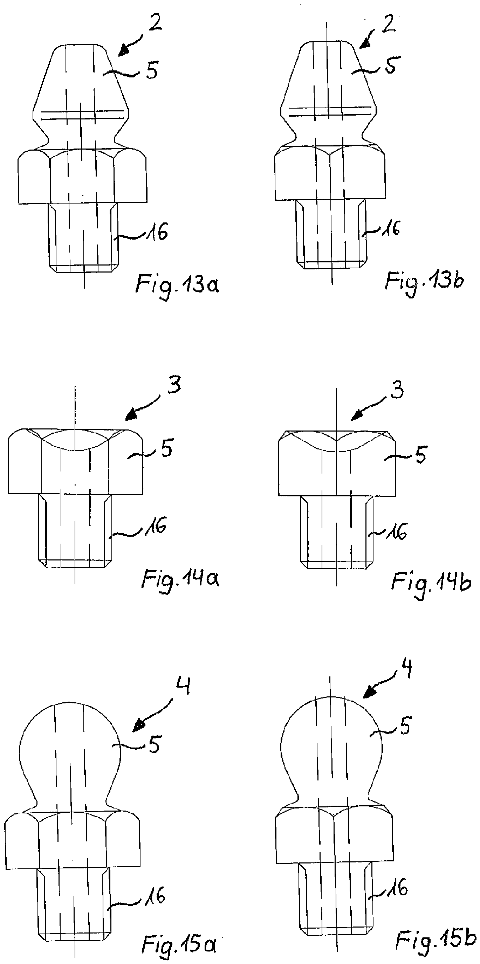

Die eingesetzten Schmiernippel, wie Kegelnippel 2, Trichternippel 3 oder Kugelnippel 4 (siehe auch Fig. 13, 14, 15) oder dergleichen weisen eine gerade Bauweise auf. Der gewünschte Winkel wird ohnehin mittels des Winkelstücks 8 eingestellt, in den die Schmiernippel eingesetzt werden. Bei diesen eingesetzten Schmiernippeln kann es sich um herkömmliche Schmiernippel handeln, die bereits auf dem Markt sind. Fig. 13 zeigt einen Kegelnippel 2, Fig. 14 einen Trichternippel 3 und Fig. 15 einen Kugelnippel 4, jeweils in Vorderansicht und in Seitenansicht. Darüber hinaus ist es möglich, dass auch sämtliche weitere Arten von Schmiernippeln eingesetzt werden. Z.B. können auch Schmiernippel, die für eine automatische Schmierung geeignet sind, eingesetzt werden.

Die Schmiernippel sind über ihr Gewinde 16 in die zweite Bohrung 10 mit korrespondierendem Innengewinde eingeschraubt, was den Vorteil hat, dass der Schmiernippel bei Bedarf oder im Reparaturfall in einfacher Weise ausgetauscht werden kann. Es ist aber auch möglich, dass der Schmiernippel in die zweite Bohrung 10 (ohne oder mit Innengewinde) eingepresst ist.

Zwischen dem Schraubenkopf 17 der Hohlschraube 11 und dem Winkelstück 8 sowie zwischen dem Schmiernippel und dem Winkelstück 8 ist jeweils ein Dichtring 18 vorgesehen, der ein Austreten des Schmiermittels nach außen verhindert und die zusammengesetzten Bauteile an den Kontaktflächen bzw. Verbindungsstellen schont.

Das Winkelstück 8 weist außen im Bereich der ersten Bohrung 9 einen Griffbereich 19 auf, der in den dargestellten Ausführungsbeispielen eine polygonale Querschnittsform hat. Dazu sind die Außenwände 20 im Bereich der ersten Bohrung 9 abgeflacht, so dass das Winkelstück 8 mit der Hand leicht drehbar ist und der eingesetzte Schmiernippel in die optimale Position gebracht werden kann. Vor allem während des Einschraubens der Hohlschraube 11 in den Bereich eines Lagers 7 kann das Winkelstück 8 am Griffbereich 19 sicher gehalten werden, so dass die eingestellte Orientierung erhalten bleibt.

Das Winkelstück 8 besteht aus Metall, insbesondere aus Messing, Stahl, Edelstahl, Aluminium oder einer Aluminiumlegierung. Hohlschraube 11 sowie der eingesetzte Schmiernippel bestehen ebenfalls aus Stahl oder anderen hochfesten Materialien, um den jeweiligen Belastungen dauerhaft standzuhalten.

### BEZUGSZEICHENLISTE

- 1): Schmiernippel-Anordnung
- 2): Kegelnippel
- 3): Trichternippel
- 4): Kugelnippel
- 5): Nippelkopf
- 6): Gewinde
- 7): Bereich eines Lagers
- 8): Winkelstück
- 9): erste Bohrung
- 10): zweite Bohrung
- 11): Hohlschraube
- 12): seitliche Bohrung
- 13): Fettpresse
- 14): Ventilkugel
- 15): Feder
- 16): Gewinde
- 17): Schraubenkopf
- 18): Dichtring
- 19): Griffbereich
- 20): abgeflachte Außenwand

## Patentansprüche

1. Schmiernippel-Anordnung mit einem Schmiernippel, der einen nach außen weisenden Nippelkopf (5) aufweist, sowie einem Gewinde (6) zum Einschrauben der Schmiernippel-Anordnung (1), wobei Nippelkopf (5) und Gewinde (6) zueinander winkelig angeordnet sind,
**dadurch gekennzeichnet, dass**
ein Winkelstück (8) vorgesehen ist, welches eine durchgängige erste Bohrung (9) sowie eine zur ersten Bohrung (9) winkelig angeordnete und in die erste Bohrung einmündende zweite Bohrung (10) aufweist, wobei die erste Bohrung von einer Hohlschraube (11) durchsetzt ist, die Hohlschraube (11) das Gewinde (6) und mindestens eine seitliche Bohrung (12) aufweist, und in der zweiten Bohrung (10) der Schmiernippel von außen befestigt ist.

2. Schmiernippel-Anordnung nach Anspruch 1,
**dadurch gekennzeichnet, dass**
erste (9) und zweite Bohrung (10) zueinander in einem Winkel von 20° bis 90° angeordnet sind.

3. Schmiernippel-Anordnung nach mindestens einem der vorhergehenden Ansprüche,
**dadurch gekennzeichnet, dass**
der Schmiernippel eine gerade Bauweise aufweist.

4. Schmiernippel-Anordnung nach mindestens einem der vorhergehenden Ansprüche,
**dadurch gekennzeichnet, dass**
der Schmiernippel in die zweite Bohrung (10) eingeschraubt oder eingepresst ist.

5. Schmiernippel-Anordnung nach mindestens einem der vorhergehenden Ansprüche,
**dadurch gekennzeichnet, dass**
zwischen einem Schraubkopf (17) der Hohlschraube (11) und dem Winkelstück (8) und/oder zwischen dem Schmiernippel und dem Winkelstück (8) ein Dichtring (18) vorgesehen ist.

6. Schmiernippel-Anordnung nach mindestens einem der vorhergehenden Ansprüche,
**dadurch gekennzeichnet, dass**
das Winkelstück (8) im Bereich der ersten Bohrung (9) außen einen Griffbereich (19) aufweist.

7. Schmiernippel-Anordnung nach mindestens einem der vorhergehenden Ansprüche,
**dadurch gekennzeichnet, dass**
das Winkelstück (8) im Bereich der ersten Bohrung (9) außen eine polygonale Querschnittsform aufweist.

8. Schmiernippel-Anordnung nach mindestens einem der vorhergehenden Ansprüche,
**dadurch gekennzeichnet, dass**
das Winkelstück (8) im Bereich der ersten Bohrung (9) abgeflachte Außenwände (20) aufweist.

9. Schmiernippel-Anordnung nach mindestens einem der vorhergehenden Ansprüche,
**dadurch gekennzeichnet, dass**
der Schmiernippel innen mit einer federbelasteten, in einer Richtung wirkenden Ventilkugel (14) ausgestattet ist.

10. Schmiernippel-Anordnung nach mindestens einem der vorhergehenden Ansprüche,
**dadurch gekennzeichnet, dass**
der Schmiernippel für eine automatische Schmierung ausgestaltet ist.

11. Schmiernippel-Anordnung nach mindestens einem der vorhergehenden Ansprüche,
**dadurch gekennzeichnet, dass**
das Winkelstück (8) aus Metall, insbesondere aus Messing, Stahl, Edelstahl, Aluminium oder einer Aluminiumlegierung oder aus Kunststoff besteht.
